# EUROPEAN PATENT SPECIFICATION

(11) **EP 2 503 927 B1**
(45) Date of publication and mention of the grant of the patent: **12.11.2014**
(21) Application number: 10832703.2
(22) Date of filing: 26.11.2010
(51) Int. Cl.: A47J 36/02, A47J 27/00

(54) **COOKING VESSEL APPLICABLE FOR INDUCTION HEATING AND METHOD FOR MANUFACTURING THEREOF**
KOCHGEFÄSS ZUR INDUKTIONSERHITZUNG UND HERSTELLUNGSVERFAHREN DAFÜR
RÉCIPIENT DE CUISSON CONVENANT AU CHAUFFAGE PAR INDUCTION ET PROCÉDÉ DE FABRICATION ASSOCIÉ

(30) Priority: 26.11.2009 FI 20096247
(43) Date of publication of application: 03.10.2012
(73) Proprietor: Iittala Group OY AB, 00560 Helsinki (FI)
(72) Inventor: PIMIÄ, Juha, FI-78310 Varkaus (FI)
(74) Representative: Kupiainen, Juhani Kalervo
(86) International application number: PCT/FI2010/050967
(87) International publication number: WO 2011/064455

(56) References cited:
- CA-A1- 1 256 748
- CN-U- 2 110 641
- CN-Y- 201 260 613
- DE-A1- 1 948 150
- DE-A1- 3 634 841
- DE-A1- 3 634 841
- DE-A1- 3 719 750
- DE-A1- 3 719 750
- JP-A- 9 117 374
- JP-A- 10 125 453
- KR-A- 20020 078 341
- KR-B1- 100 913 118
- US-A- 4 564 001
- US-A1- 2006 134 404
- RICHARDS, R. W. ET AL.: 'Metallurgy of continuous hot dip aluminizing.' INTERNATIONAL MATERIALS REVIEWS vol. 39, no. 5, 1994, pages 191 - 212, XP008156586

## Description

### TECHNICAL FIELD OF THE INVENTION

The invention relates to a cooking vessel, such as kettle, frying pan or cooking pot, which has a bottom part suitable for heating by induction. The invention also relates to manufacturing method of a cooking vessel applicable for induction heating.

### BACKGROUND OF THE INVENTION

First induction stoves came into the market in the early 1970s, but an idea of induction itself goes back to as early as the beginning of 20^{th} century. Undeniable advantages of an induction stove are high power density, possibility of targeting the heating, heating speed and rapid response to power control. In addition, an induction stove is also more secure than an ordinary stove, as stove's surface heats up only to the amount of heat conducted from the cooking vessel on the stove.

On an induction stove a cooking vessel heats up by means of electromagnetic induction. Induction heating is based on magnetic hysteresis losses occurring in material at the bottom of a cooking vessel, which are converted to heat energy. The coils are placed underneath marked spots on the cooktop, to which coils a high frequency alternating current is entered generating a magnetic flux passing through a heated item. Changing magnetic flux induces induction current in a heated item and causes warming-up of the material. In order that a vessel could be used with an induction stove, ferromagnetic material ought to be present on the bottom of a vessel.

The problems with exploitation of an induction stove are mainly related to cookware materials used therein and to their manufacturing. The publication EP 1541 072 B1 discloses a cooking utensil, where a bottom plate for an induction heating is connected to projections on container's bottom so, that holes are provided to the bottom plate to the projections points on the bottom of the container. Plate and container are joined together by positioning the projections of the container to the holes made in the bottom plate and by clamping the projections acting as rivets. Finally, the projections are grounded and polished in order to achieve a suitable appearance. Solution disclosed in the publication thus includes several stages and requires a precise placement of projections and holes. In solution of the publication a bottom plate is of stainless steel, which is moisture and washing resistant. When using stainless steel, operation efficiency of the induction stove is not optimal, and user is thus unable to exploit the benefits of the induction stove in full extent. In addition, stainless steel is an expensive material which thus results in significant increase in manufacturing costs of an end product. Although stainless steel is moisture resistant as such, corrosion may still be induced at the interfaces between different materials at the bottom of a cooking vessel.

The publication US4614852 (A) discloses a method, where vessel's bottom is spray coated by iron layer, which, in turn, is coated by aluminum using a spray coating method. Manufacturing costs of implementation like that are high, and often an iron layer does not stay attached to the bottom of the vessel reliably enough, as a result of insufficient adhesion between layers. Sprayed iron layer becomes porous; thereby induction properties of the cooking vessel, produced by method like that, worsen. In order that induction properties of an iron layer formed by spray coating would be sufficient, an iron layer has to be at least 0,6 mm thick. However, layer thicknesses achieved by spray coating method, are typically considerably smaller.

The publication DE 1948 150 (A1) discloses an arrangement for a cooking vessel, comprising a base plate having a good thermal conductivity, such as a copper or an aluminium plate. The document is directed to solve a problem how to reliably braze the base plate, which has a low melting point, to the bottom part of the vessel. The problem is solved by entirely cladding the base plate in a film of a metal having a higher melting temperature, and further bonding the base plate to the bottom of the vessel by using a soldering metal.

### SUMMARY OF THE INVENTION

The object of the present invention is to remove or alleviate previously mentioned problems related to solutions of prior art. In particular, the invention is implied to solve how a member with good ferromagnetic properties may be arranged to cooking vessel, applicable for induction heating, and how this ferromagnetic member may be coated by a protective layer.

A cooking vessel applicable for induction heating according to present invention is characterized by features disclosed in the characterizing portion of the independent claim 1.

A method for manufacturing of a cooking vessel applicable for induction heating according to the present invention is characterized by features disclosed in the characterizing portion of the independent claim 17.

According to an embodiment of the invention, a cooking vessel applicable for induction heating comprises a blank container, such as kettle, cooking pot or pan, and a ferromagnetic bottom member, which bottom member is arranged to the bottom part of a blank container, preferably to the deepening made in the bottom part in order to achieve the induction heating for a cooking vessel. In addition, ferromagnetic bottom member is coated by at least one layer of material. Ferromagnetic bottom member is coated at least from the one side, but preferably, each side of ferromagnetic bottom member is coated for example by, immersing a ferromagnetic member in coating material.

According to a preferred embodiment of the invention, the member is manufactured from strongly ferromagnetic material, such as iron, e.g. steel. According to another embodiment of the invention, the member is manufactured from ferromagnetic alloy, such as stainless steel or iron-nickel composition.

According to another embodiment of the invention, the material used for coating of a ferromagnetic bottom member conducts electricity, and the material used is e.g. metal, such as aluminum or magnesium, and the provided coating is sufficiently thin so that electromagnetic induction properties of the bottom would not be substantially impaired. In order to preserve induction properties, the thickness of a coating must be 100 µm at the most, preferably 1-100 µm, more preferably 5-40 µm, most preferably 10-25 µm. If the thickness of a coating is too large, an induction stove will not recognize the vessel as suitable for induction heating.

Preferred embodiments of the invention are also disclosed in the independent claims.

In this application term "cooking vessel" means a vessel, intended for food preparation, for example kettle, cooking pot or frying pan, the bottom part of which is manufactured to be heat resistant, and through the bottom part of which heat is conducted to the cooking vessel.

In addition, the term " blank container" used in this application means a cooking vessel mentioned above without a bottom member attachable thereto for induction heating.

Usefulness of a cooking vessel in accordance with the invention, is based on several issues. As a member intended for induction heating is coated by a material, it is possible to provide a surface of a cooking vessel, and in particular, a surface of a cooking vessel's bottom, from completely the same, desired material. At the same time a cooking vessel may be protected against mechanical and chemical stresses, such as corrosion, regardless of which ferromagnetic material is used in a bottom member.

By joining blank container and bottom member together using pressure welding and/or impact welding, a reliable, well temperature variation withstanding connection between bottom member and blank container may be achieved. A coating for a ferromagnetic member may also enable an attachment between a ferromagnetic plate and aluminium, possibly used in blank container manufacturing. It may be possible to simplify the manufacturing of blank container and bottom member, since the bottom member does not need to be dimensioned to fit to the blank container with exceptional precision.

By coating the member intended for induction heating by some coating material, as, e.g. aluminium, copper, nickel or magnesium, it is also possible to perform surface treatments applicable for material in question. By means of surface treatment mechanical and/or corrosion-characteristics of a surface may be improved. For example for aluminium different kinds of anodizing may be performed, which raise surface's hardness and improve corrosion-characteristics.

In addition, other advantages may be achieved by using in a bottom part a member made of a material whose ferromagnetic properties are better than that of, e.g. stainless steel. Ferromagnetic member of a bottom part may be thinner than usually used stainless steel, which decreases the weight of a cooking vessel and thus facilitates its handling. By using a thinner material the advantage is also achieved that a bottom structure is more stable upon heating, i.e. bottom geometry changes less upon heating with a thinner material than with a thicker material. Thermal expansion coefficients of the bottom material and the frame are, in fact, usually unequal, in which case the bottom tries either to swell or become hollowed upon heating.

Ferromagnetic member has often better thermal conductivity properties than, for example, above mentioned stainless steel, and thus, use of ferromagnetic member in the bottom of a cooking vessel may improve thermal conductivity of a whole vessel. Because ferromagnetic member of the bottom part is coated by corrosion protective agent, a cooking vessel may also be well used as, for example, a dishwasher safe container. By using in the bottom part of a cooking vessel member made, e.g, from iron, low manufacturing costs may be achieved in comparison to generally used alloys, such as stainless steel.

An additional advantage of the invention is that a ferromagnetic member may be made from a material, to which users could be allergic as such, but which, when coated, does not cause allergy problems. Some of these materials are, e.g. iron-nickel alloys, which are strongly ferromagnetic and by which an induction heating of high efficiency is thus achieved. Such an iron-nickel alloy may contain, e.g. 30-50% nickel.

When the coating layer of ferromagnetic member is thin, the coating layer does not impair substantially the efficiency of an induction heating, although the coating material is not ferromagnetic. The use of a non-ferromagnetic material as a coating is not expensive, since such coating is easy to manufacture, and it is corrosion resistant, it has a hard surface, it is easy to clean and user-safe.

### BRIEF DESCRIPTION OF THE FIGURES

Next, preferred embodiments of the invention will be described in more detail with reference to the following figures, wherein,
Figure 1 illustrates a cross-section image of a cooking vessel and its bottom structure according to an embodiment of the invention;
Figure 2 illustrates a cross-section image of cooking vessel and its bottom structure according to another embodiment of the invention;
Figures 3a-3c illustrate exemplary bottom members of a cooking vessel according to the invention; and
Figure 4 illustrates a flow chart of a method for manufacturing a cooking vessel according to an embodiment of the invention.

### DETAILED DESCRIPTION OF THE EMBODIMENTS

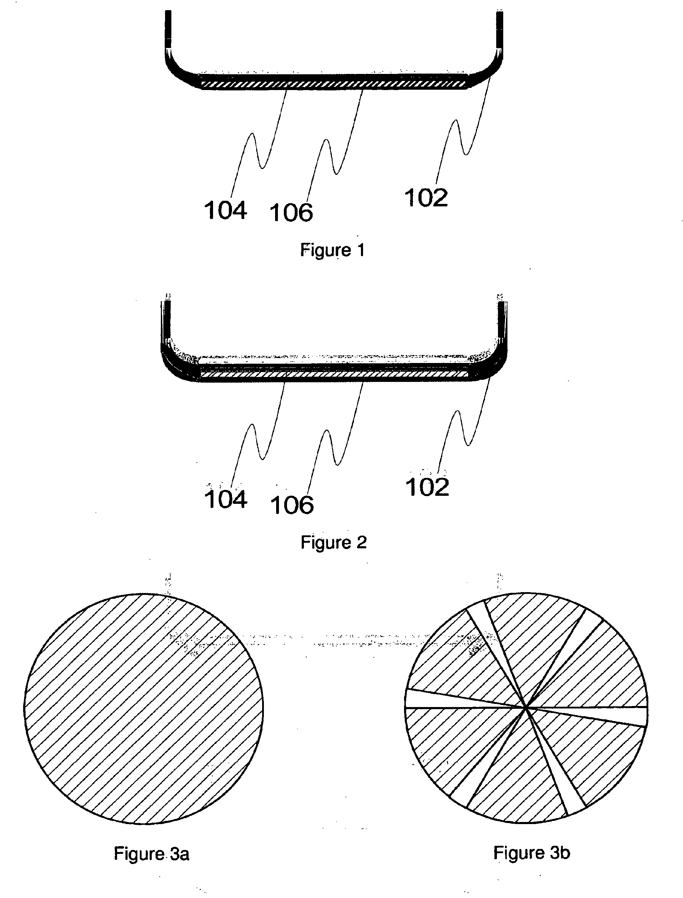

Figure 1 illustrates a cross-section image of a cooking vessel and its bottom structure according to an embodiment of the invention in question. Cooking vessel comprises a blank container 102, a ferromagnetic bottom member 104 and a coating layer 106 of a bottom member.

A blank container 102, such as, for example, kettle, frying pan or cooking pot, comprises a wall part and a bottom part, and a blank container 102 in question is usually open from its top part. In the embodiments of figures 1 and 2, a deepening for ferromagnetic bottom member 104 is provided to a bottom part of blank container 102 . Ferromagnetic bottom member 104 does not cover the even bottom part of a blank container 102 completely, but on the outside of the bottom part a 2-10 mm wide ring may remain. By using a deepening on the bottom part of a blank-container 102 such an advantage is achieved that a ferromagnetic member 104 does not need to be pressed to the bottom so precisely that a bottom member 104 would cover the even bottom of a blank container 102 completely, and that a ferromagnetic plate 104 would end there, where the wall of a blank container 102 begins. In another embodiment, the bottom part of a blank container 102 is even, and a ferromagnetic bottom member 104 is attached directly to the bottom part of a blank container 102.

Blank 102 may be manufactured from different heat- and exploitation-resistant materials, such as aluminium, e.g. casting aluminium or aluminium plates, magnesium, e.g. casting magnesium or magnesium plates, copper, titanium or stainless steel. The thickness of blank container 102 may vary according to its use. In addition, blank container 102 may, if needed, be thicker or thinner in its bottom part than in its wall part.

To the bottom part of a blank container a bottom member 104 with good ferromagnetic properties is thus arranged, which preferably also has a good thermal conductivity. Bottom member 104 may be manufactured from iron, e.g. steel. Use of iron in a bottom plate brings many good characteristics, as ferromagnetic properties of iron are excellent in terms of induction stove. In addition, its thermal conductivity is better than that of stainless steel; thereby it quickly conducts heat generated in the bottom member 104 also to the blank container 102.

Depending on the embodiment, the thickness of a bottom member 104 may vary. If bottom member 104 is of iron, its thickness may be, e.g. less than 0,6 mm, preferably 0,3-,6 mm, e.g. 0,4 mm. If bottom member is from stainless steel, its thickness is preferably at least 0,5 mm.

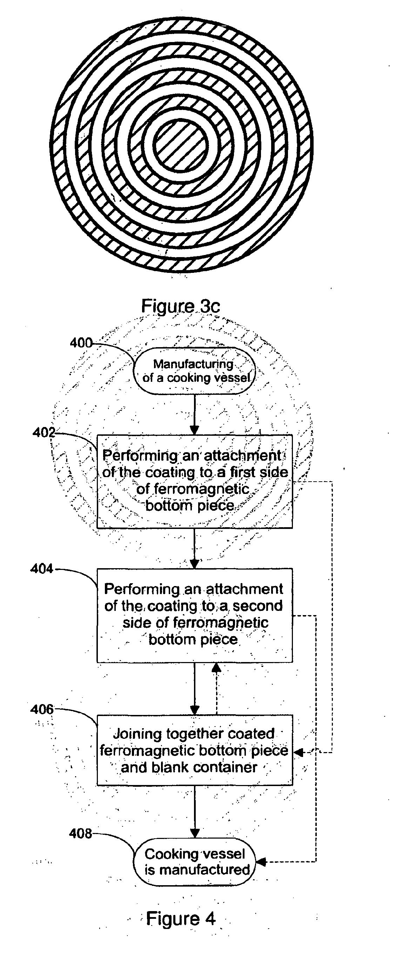

Bottom member 104 preferably has a shape of a round plate, as can be seen in Figure 3a. Plate diameter may be equal to the diameter of a bottom of a blank container, equal to the diameter of a deepening formed for a bottom member, or preferably smaller than that. Shape of a ferromagnetic bottom member may vary; and the member does not necessarily need to be formed by one part, but it may be formed from a number of different parts, as can be seen in Figures 3b and 3c, in which different ways to form a bottom member are presented in exemplary manner. Also the bottom member does not need to have an even surface, but the surface may be patterned, e.g. there may be grooves. It is clear for those skilled in art that shape of the bottom member is not limited to these examples, presented in Figures 3a-3c, but its shape and pattern may vary depending on the embodiment.

It is also possible that a bottom member extends to the wall area and it is thus in accordance with the shape of a vessel, bent at its edges. It is even possible that a bottom member covers, in addition to the bottom, a whole wall of a cooking vessel. In this case, coating of the outer surface of a bottom member covers at the same time the bottom and the outer wall of a vessel. In an embodiment, bottom-area of a vessel is smaller than an entire diameter of a vessel, and the edges of a vessel extend from a bottom part obliquely, at a small angle with respect to a bottom level. These kinds of vessels are, for example, so called wok-pans. When the bottom part extends in such a way also to an oblique wall area, an induction field of a stove reaches this area as well and enhances the heating of a vessel.

As can be seen from figures 1 and 2, bottom member104 is coated by at least one material layer 106. In order to improve the attachment of a bottom member, the bottom member 104 is usually coated from both sides, as can be seen from the figures. According to a preferred embodiment, each side of a bottom member is coated by, for example, immersing a bottom member in molten coating material. The coating may be applied onto a bottom member surface also by some other way, such as, for example, by spraying.

For surface coating somewhat known coating materials may be used, such as, e.g. aluminium, magnesium, copper or nickel, which coating material protects a ferromagnetic bottom member against corrosion and mechanical damages caused by exploitation. Material used for coating may be, in addition, of electrically conductive material, for example metal. Advantages of the metallic coating material in use are better sticking of the coating to a bottom member and possibly also improvement of an attachment between a bottom member and a blank container. Metallic coating material has also good heat resistance. It is obvious to those skilled in art that coating materials are not limited to those presented above, but a bottom member may be coated also by some other material suitable for each purpose.

Material used for coating, may also be exploited for attachment of a ferromagnetic member to a blank container, for example, to a blank container made from aluminium, when a blank container and a ferromagnetic bottom member are attached by pressure- and/or impact welding. Depending on the embodiment, the thickness of a coating layer used may vary, but the coating layer, attached by pressure- and/or impact-welding, may have thickness of preferably about 1-100 µm, more preferably 5-40 µm, most preferably 10-25 µm. Coating layer, attached by spraying, may on its behalf be as thick as, e.g., about 0,01-0,25 mm.

In some embodiments also more than one material layer may be used for coating of a ferromagnetic member, or the member may be coated from one or both sides with a material layer, which is of some other material than from which a blank container 102 is manufactured, e.g. copper. Figure 2 illustrates an embodiment, where ferromagnetic bottom member104 is coated with some other material layer 106 than from which a blank container 102 is manufactured, and a coating layer 106 is provided to extend partly or wholly also onto the outer surface of a blank container 102. In this case an aesthetically presentable material forming an outer surface, such as, e.g. copper, may be preferably used as a coating material.

In another embodiment, bottom member 104 is manufactured from composition metal, such as an iron-nickel alloy, ferromagnetic properties of which composition disappear or significantly weaken, when bottom member 104 reaches the certain temperature, i.e. Curie-point of the material. This kind of embodiment prevents an overheating of a cooking vessel during use. When ferromagnetic properties are abolished from the bottom member 104, a cooking vessel starts to cool down, and after the vessel is cooled to the temperature, where ferromagnetic properties of a bottom member 104 are returned, cooking vessel starts to heat up again. In this way the temperature of a cooking vessel remains in temperature range defined by ferromagnetic properties of composition metal.

Figure 4 illustrates by a flow chart a method for cooking vessel manufacturing 400 according to the invention. At first, a blank container is manufactured, and ferromagnetic material is arranged for a bottom member (not shown in Figure 4). Stages 402 and 404 illustrate the coating of a ferromagnetic member. According to a preferred embodiment, a bottom member is coated by immersing a ferromagnetic bottom member in molten coating material. Coating may be applied to one or more surfaces of a bottom member also by some other way, e.g. by spraying. As a bottom member, e.g. a hot-anodized steel plate may be used, which is manufactured so that heated steel band is led e.g. through molten aluminium bath. By coating method like that all the surfaces of a steel plate are coated at the same time, thereby stages 402 and 404 are simultaneous. In addition to aluminium, some other suitable materials may be used as a coating material, as described above.

It is, however, possible to use other alternative coating methods, in which only one surface of a ferromagnetic plate can be coated at a time or plate surfaces are being coated at different stages, as shown next. At first, during stage 402, the coating is attached to the first side of a ferromagnetic bottom plate. The coating may be attached e.g. by pressure-welding or spraying. During pressure-welding a bottom member is heated up, and a coating film, e.g. aluminium foil, is pressed to clamp using a force provided by pressure-welding, for example, a force equal to 1000-2000 tons. In this context the coating may be attached also to side edge of a bottom member. Coating achieved by spraying, instead, is sprayed as a layer directly to a bottom member's surface and/or edges. In some embodiments edges of bottom member may be left uncoated at this stage, especially, if bottom member will finally be coated by some other material. According to an embodiment, coating layer is sprayed to the surface of a bottom member afterwards, for example, thermally.

During stage 404 the coating is attached to the second side of a bottom member. Coating material may be either same material as used for coating of a first side, or, then, for the second side some other material may be used. Coating attachment to the second side may be performed by using the same method as for the first side or, then, the coating may be attached to the second side by using some other method.

According to an embodiment, a bottom member is pre-coated by using e.g. hot aluminizing. This way a bottom member may be coated from the both sides, or only from the one side, depending on the embodiment.

During stage 406 a coated bottom member and a blank container are joined together. Attachment preferably occurs by pressure-welding. In some embodiments, wherein attached by pressure-welding material film, such as an aluminium film, is used, stages 404 and 406 may be combined, and the coating is attached to a bottom member at the same time while a bottom member and a blank container are joined to produce a cooking vessel. Coating material of a bottom member may be chosen so that the coating material would help a bottom member to attach to a blank container, when using, e.g. pressure and/or impact-welding.

An alternative for joining a bottom member and a blank container together is a method known as such, to staple the projections, formed to a blank, to the holes located at corresponding points of a bottom plate, as was disclosed previously in the description of prior art.

In embodiments, wherein the coating is attached by spraying, a cooking vessel may be manufactured by joining a ferromagnetic bottom member and a blank container together (stage 406) right after stage 402, where the first side of a bottom member is coated by spraying the coating onto the member's surface. After that stage 404 may be performed, where the second side of a bottom member is coated. Arrangement like that is preferable especially when the coating, sprayable onto the surface of the second side of a bottom member, is also extended at least partly over the cooking vessel.

When a ferromagnetic bottom member is coated and joined to a blank container, a cooking vessel is manufactured. After that some finalizing actions may be performed for a vessel, such as polishing and attachment of possible brackets or a handle.

A protection scope of the invention is defined by the following patent claims. It is, however, clear to those skilled in art that details of the different aspects of the invention may vary within the whole inventive idea.

## Claims

1. A cooking vessel applicable for induction heating, which cooking vessel comprises a blank container (102), such as kettle, cooking pot or pan, to which blank container (102) a ferromagnetic bottom member (104) is arranged for achieving an induction heating to a cooking vessel, **characterized in that** both sides of said ferromagnetic bottom member (104) is coated by at least one metal layer (106), which metal layer (106) has a depth of 5-40 µm.

2. A cooking vessel according to claim 1, wherein ferromagnetic part of a bottom member (104) is manufactured from iron.

3. A cooking vessel according to claim 1, wherein ferromagnetic part of a bottom member (104) is manufactured from composition metal, such as stainless steel or iron-nickel composition.

4. A cooking vessel according to any of the preceding claims, wherein thickness of a bottom member (104) is at the most 0,6 mm.

5. A cooking vessel according to any of the preceding claims, wherein a bottom member (104) comprises of at least two parts.

6. A cooking vessel according to any of the preceding claims, wherein a bottom member (104) substantially forms a round, plate-like plane.

7. A cooking vessel according to any of the preceding claims, wherein material layer applied for coating of a bottom member (104) is corrosion protective material, such as, for example, aluminium.

8. A cooking vessel according to any of the preceding claims, wherein material layer applied for coating of a bottom member is material, from which a blank container (102) is mainly manufactured.

9. A cooking vessel according to any of the preceding claims, wherein material used for coating of a bottom member (104) conducts electricity.

10. A cooking vessel according to any of the preceding claims, wherein a ferromagnetic bottom member (104) is coated also by a second material layer.

11. A cooking vessel according to any of the preceding claims, wherein material layer, used for coating of a ferromagnetic member (104), also extends completely or partly to the outer surface of a blank container (102).

12. A cooking vessel according to any of the preceding claims, wherein a bottom (104) member is hot-anodized steel plate.

13. A method for manufacturing of a cooking vessel applicable for an induction heating, **characterized in that** manufacturing of the cooking vessel includes at least the following stages:
- manufacturing blank container (102),
- coating of both sides of a ferromagnetic bottom member (104) by at least one metal layer having a depth of 5-40 µm,
- joining together of a coated ferromagnetic bottom member (104) and a blank container (102).

14. A cooking vessel according to claim 17 or 18, wherein coating is applied to a ferromagnetic member (104) in molten metal bath.

15. A method according to any of claims 17-19, wherein a bottom member (104) and a blank container (102) are joined together by pressure welding.

## Patentansprüche

1. Kochgefäß, nutzbar für eine Induktionserwärmung, welches Kochgefäß einen Füllform-Behälter (102), wie beispielsweise einen Kochkessel, einen Kochtopf oder Pfannentopf, aufweist, an welchem Füllform-Behälter (102) ein ferromagnetisches Bodenelement (104) zum Erzielen einer Induktionserwärmung für das Kochgefäß angeordnet ist, **dadurch gekennzeichnet, dass** beide Seiten des besagten ferromagnetischen Bodenelements (104) mit zumindest einer Metallschicht (106) beschichtet sind, welche Metallschicht (106) eine Tiefe von 5-40 µm hat.

2. Kochgefäß nach Anspruch 1, wobei ein ferromagnetischer Teil eines Bodenelements (104) aus Eisen hergestellt ist.

3. Kochgefäß nach Anspruch 1, wobei ein ferromagnetischer Teil eines Bodenelements (104) aus einer Metallzusammensetzung hergestellt ist, wie beispielsweise einer Zusammensetzung aus rostfreiem Stahl oder Eisen-Nickel.

4. Kochgefäß nach einem der vorangehenden Ansprüche, wobei eine Dicke eines Bodenelements (104) höchstens 0,6 mm beträgt.

5. Kochgefäß nach einem der vorangehenden Ansprüche, wobei ein Bodenelement (104) zumindest zwei Teile umfasst.

6. Kochgefäß nach einem der vorangehenden Ansprüche, wobei ein Bodenelement (104) im Wesentlichen eine runde, plattenförmige Ebene bildet.

7. Kochgefäß nach einem der vorangehenden Ansprüche, wobei eine zum Beschichten eines Bodenelementes (104) aufgetragene Materialschicht ein Korrosions-Schutzmaterial ist, wie beispielsweise Aluminium.

8. Kochgefäß nach einem der vorangehenden Ansprüche, wobei eine zum Beschichten eines Bodenmaterials aufgebrachte Materialschicht ein Material ist, aus dem ein Füllform-Behälter (102) hauptsächlich hergestellt ist.

9. Kochgefäß nach einem der vorangehenden Ansprüche, wobei ein zum Beschichten eines Bodenelements (104) verwendetes Material elektrisch leitfähig ist.

10. Kochgefäß nach einem der vorangehenden Ansprüche, wobei ein ferromagnetisches Bodenelement (104) ferner durch eine zweite Materialschicht beschichtet ist.

11. Kochgefäß nach einem der vorangehenden Ansprüche, wobei sich eine zum Beschichten eines ferromagnetischen Elementes (104) verwendete Materialschicht auch vollständig oder teilweise zur Außenfläche eines Füllform-Behälters (102) erstreckt.

12. Kochgefäß nach einem der vorangehenden Ansprüche, wobei ein Bodenelement (104) eine heißeloxierte Stahlplatte ist.

13. Verfahren zur Herstellung eines Kochgefäßes, das für eine Induktionserwärmung nutzbar ist, **dadurch gekennzeichnet, dass** die Herstellung des Kochgefäßes zumindest die folgenden Schritte umfasst:
- Herstellen eines Füllform-Behälters (102),
- Beschichten beider Seiten eines ferromagnetischen Bodenelementes (104) durch zumindest eine Metallschicht mit einer Tiefe von 5-40 µm,
- Gegenseitiges Verbinden eines beschichteten ferromagnetischen Bodenelements (104) mit einem Füllfiorm-Behälter (102).

14. Verfahren nach Anspruch 13, wobei ein Beschichten auf ein ferromagnetisches Element (104) in einem geschmolzenen Metallbad erfolgt.

15. Verfahren nach einem der Ansprüche 13 - 14, wobei ein Bodenelement (104) und ein Füllfiorm-Behälter (102) durch Druck-Schweißen miteinander verbunden werden.

## Revendications

1. Récipient de cuisson convenant au chauffage par induction, lequel récipient de cuisson comprend un récipient brut (102), tel qu'une bouilloire, une casserole ou une poêle, sur lequel récipient brut (102), on agence un élément formant fond ferromagnétique (104) pour chauffer par induction un récipient de cuisson, **caractérisé en ce que** les deux côtés dudit élément formant fond ferromagnétique (104) sont recouverts par au moins une couche de métal (106), laquelle couche de métal (106) a une profondeur de 5 - 40 µm.

2. Récipient de cuisson selon la revendication 1, dans lequel la partie ferromagnétique d'un élément formant fond (104) est fabriquée à partir de fer.

3. Récipient de cuisson selon la revendication 1, dans lequel la partie ferromagnétique d'un élément formant fond (104) est fabriquée à partir d'un métal de composition, telle qu'une composition d'acier inoxydable ou de fer - nickel.

4. Récipient de cuisson selon l'une quelconque des revendications précédentes, dans lequel l'épaisseur d'un élément formant fond (104) est de 0,6 mm au maximum.

5. Récipient de cuisson selon l'une quelconque des revendications précédentes, dans lequel un élément formant fond (104) comprend au moins deux parties.

6. Récipient de cuisson selon l'une quelconque des revendications précédentes, dans lequel un élément formant fond (104) forme sensiblement un plan rond, en forme de plaque.

7. Récipient de cuisson selon l'une quelconque des revendications précédentes, dans lequel la couche de matériau appliquée pour recouvrir un élément formant fond (104) est un matériau de protection contre la corrosion, tel que, par exemple, l'aluminium.

8. Récipient de cuisson selon l'une quelconque des revendications précédentes, dans lequel la couche de matériau appliquée pour recouvrir un élément formant fond est un matériau, à partir duquel un récipient brut (102) est principalement fabriqué.

9. Récipient de cuisson selon l'une quelconque des revendications précédentes, dans lequel le matériau utilisé pour recouvrir un élément formant fond (104) conduit l'électricité.

10. Récipient de cuisson selon l'une quelconque des revendications précédentes, dans lequel un élément formant fond ferromagnétique (104) est recouvert également par une seconde couche de matériau.

11. Récipient de cuisson selon l'une quelconque des revendications précédentes, dans lequel la couche de matériau, utilisée pour recouvrir un élément ferromagnétique (104), s'étend également complètement ou partiellement sur la surface externe d'un récipient brut (102).

12. Récipient de cuisson selon l'une quelconque des revendications précédentes, dans lequel un élément formant fond (104) est une plaque en acier anodisé à chaud.

13. Procédé pour fabriquer un récipient de cuisson convenant au chauffage par induction, **caractérisé en ce que** la fabrication du récipient de cuisson comprend au moins les étapes suivantes consistant à :
- fabriquer un récipient brut (102),
- recouvrir les deux côtés d'un élément formant fond ferromagnétique (104) avec au moins une couche de métal ayant une profondeur de 5 - 40 µm,
- assembler un élément formant fond ferromagnétique (104) recouvert et un récipient brut (102).

14. Récipient de cuisson selon la revendication 17 ou 18, dans lequel le revêtement est appliqué sur un élément ferromagnétique (104) dans un bain de métal en fusion.

15. Procédé selon l'une quelconque des revendications 17 à 19, dans lequel un élément formant fond (104) et un récipient brut (102) sont assemblés par soudage par pression.
